# EUROPEAN PATENT SPECIFICATION

(11) **EP 1 837 166 B1**
(45) Date of publication and mention of the grant of the patent: **06.01.2010**
(21) Application number: 07405091.5
(22) Date of filing: 20.03.2007
(51) Int. Cl.: B29D 11/00

(54) **Molding of miniature structured elements using a tool incorporating spacer elements**
Abformung von Mikrostrukturen mit einem Werkzeug mit integrierten Abstandselementen
Moulage d'éléments miniatures structurés avec un outil incorporant des éléments espaceurs

(30) Priority: 20.03.2006 US 384537
(43) Date of publication of application: 26.09.2007
(73) Proprietor: Heptagon Oy, 02150 Espoo (FI)
(72) Inventor: Rudmann, Hartmut, 8918 Unterlunkhofen (CH); Heimgartner, Stephan, 6004 Luzern (CH); Westenhöfer, Susanne, 8907 Wettswil (CH); Rossi, Markus, 8645 Jona (CH)
(74) Representative: Frei Patent Attorneys

(56) References cited:
- EP-A- 0 255 088
- EP-A- 1 443 344
- EP-A- 1 527 870
- US-A- 4 197 266

## Description

### FIELD OF THE INVENTION

The invention is in the field of manufacturing optical elements, in particular refractive optical elements and/or diffractive micro-optical elements, by means of a replication process that includes embossing or moulding steps. More concretely, it deals with a method and a replication tool for manufacturing a plurality of elements as described in the preamble of the corresponding independent claims.

### BACKGROUND OF THE INVENTION

WO 2004/068198 by the same applicant, describes a replication process for creating micro-optical elements. A structured (or micro-structured) element is manufactured by replicating/shaping (moulding or embossing or the like) a 3D- structure in a preliminary product using a replication tool. The replication tool comprises a spacer portion protruding from a replication surface. A replicated micro- optical element is referred to as replica.

The spacer portions allow for an automated and accurate thickness control of the deformable material on the substrate. They may comprise "leg like" structures built into the tool. In addition the spacers prevent the deformation of the micro optical topography since the spacers protrude further than the highest structural features on a tool.

The replica (for example a micro-optical element or micro-optical element component or an optical micro-system) may be made of epoxy, which is cured - for example UV cured - while the replication tool is still in place. UV light curing is a fast process that allows for a good control of the hardening process.

The replication process may be an embossing process, where the deformable or viscous or liquid component of the preliminary product to be shaped is placed on a surface of a substrate, which can have any size. For example it can be small-size having a surface area corresponding to the area of only one or a few elements to be fabricated. As an alternative, the substrate can be wafer scale in size. 'Wafer scale' refers to the size of disk like or plate like substrates of sizes comparable to semiconductor wafers, such as disks having diameters between 2 inches and 12 inches. Then, the replication tool is pressed against this surface.

The embossing step stops once the spacer portions abut against the top surface of the substrate. Said surface thus serves as a stop face for the embossing.

As an alternative, the replication process may be a moulding process. In a moulding process, in contrast, the tool comprising the spacer portions, for example comprising leg-like structures, is first pressed onto the surface of a substrate to form a defined cavity which is then filled through a moulding process.

The spacer portion is preferably available in a manner that it is 'distributed' over at least an essential fraction of the replication tool, for example over the entire replication tool or at the edge. This means that features of the spacer portion are present in an essential fraction of the replication tool, for example, the spacer portion consists of a plurality of spacers distributed over the replication surface of the replication tool. The spacers allow for an automated and accurate thickness control of the deformable material layer.

EP 1 527 870 discloses a method for selective area stamping of optical elements on a substrate. EP 1 443 344 shows a method of manufacturing optical elements by means of a replication tool comprising spacers. US 4,197,266 discloses a method for forming ophthalmic lenses.

### DESCRIPTION OF THE INVENTION

It is an object of the invention to create a method and a replication tool for manufacturing a plurality of elements of the type mentioned initially, which provides an improvement over the currently known tools and method.

According to a first aspect of the invention, a method of manufacturing a plurality of elements by replication thus comprises the steps of
- providing a replication tool that comprises a plurality of replication sections having negative structural features defining the shape of the elements, the tool further comprising a plurality of first spacer portions with a flat surface portion;
- providing a substrate;
- moving the replication tool and the substrate against each other, with a replication material in a plastically deformable or viscous or liquid state located between the tool and the substrate;
- applying a force for moving the tool and the substrate against each other, until the first spacer portions are located at a distance from the substrate, the flat surface portion parallel to a surface thereof, and with replication material remaining between the first spacer portions and the substrate, and
- hardening the replication material to form the elements.

The first spacer portions may also be called "floating spacers" because the flat surface portions of the first spacer portions "float" over the substrate surface, separated from it by a thin layer of replication material.

The first spacer portions are arranged so that the dicing lines - the lines where after replication, hardening and removing the replication tool the substrate with hardened replication material is separated into individual parts, e.g. chips - are at the positions where first spacer portions were arranged. Therefore, along the dicing lines only a comparably thin layer of replication material - the base layer - remains. This helps to prevent delamination of the replication material from the substrate.

The distance between the flat surface portion and the substrate - thus the thickness of a layer of the replication material - may be determined by second spacer portions ("contact spacers") which protrude higher on the replication tool than the first spacer portions and which abut upon the substrate surface during replication. As an alternative or in addition thereto, said distance may be determined by the balance between the magnitude of said force applied and the cohesive forces within the replication material, and - depending on the properties of the replication material - possibly also adhesive forces between the replication material and the substrate and tool. As yet another alternative, the distance may determined by be active distance adjusters and/or controllers (such as a mask aligner) or other means.

In this embodiment, the distance between the first spacer portions and the substrate is constrained by the relative height or the second spacer portions with respect to the first spacer portions. This provides even higher precision, with
- the second spacer portions absorbing at least part of the force between the tool and substrate and determining a reference height of the first spacer portions with respect to the substrate, and
- the first spacer portions - potentially being close to the element to be replicated - precisely defining local height differences. Also, the first spacer portions (via the replication material ) may if necessary absorb a remainder of the force and settle at a predetermined distance from the substrate. The first spacer portions also allow the tool to adapt to minor irregularities of the planarity of the substrate.

For this purpose, the replication material is preferably applied to the tool or the substrate without covering a second spacer support area, such that no replication material is present between the second spacer portions and the substrate after the tool is moved against the substrate. That is, both the tool and the substrate have a second spacer support area - for the tool, this is the contact area of the tool itself, for the substrate it is the area on which the contact area of the tool will be placed.

Preferably, in the direction of movement of the tool against the substrate, the height of the first spacer portions and the height of the second spacer portions differs by a element spacer height difference, the element spacer height difference being in the range of 1 to 500, preferably 5 to 30, ideally 7-15 micrometers.

The second spacer portions preferably also comprise flat surface portions that are parallel to the substrate.

In a preferred embodiment of the invention, the first spacer portions and second spacer portions define a height of the elements above the substrate: This is possible since the final location of the tool over the substrate and therefore the height of the structured surface of the elements with respect to substrate is precisely controllable, as described. Preferably, the element is a refractive optical element and the height of the elements above the substrate is predetermined in accordance with required optical properties of the element. This feature is special for refractive elements - such as refractive lenses -, where the relation or distance between the top and bottom surfaces plays a role, as opposed to diffractive elements, where the optical function is mainly defined by the function of the structured surface (a diffraction pattern) defined by the structure of the replication section.

The replication material may be dispensed in a single dispense operation (as a single blob) or as a few single dispense operations - each providing replication material for a plurality of replication sections - on the substrate or on the replication tool for the entire tool-scale replication. If this is the case, the second spacer portions - if present - are preferably tool-scale spacer portions for example arranged at the periphery of the tool surrounding the replication sections. The second spacer portions then do not comprise or define any replication sections.

As an alternative, the replication material may be dispensed in an array of individual, separate dispense operations (or blobs). A potentially pre-determined volume of replication material is applied to an array of points, corresponding the location of the parts to be separated later by dicing, and each blob of replication material for example being confined to a part. Each part comprises one element to be fabricated or a group of - for example four - elements, and there are areas between the parts that are free of replication material. In this embodiment of the invention, the second spacer portions - if present - may be distributed over the entire replication tool. For example, each part may comprise a second spacer portion.

This alternative of dispensing replication material allows to provide the replication sections with an optimal amount of replication material and reduces the chance of defects. Further details of this aspect are described in a co-pending application "Method and tool for manufacturing optical elements" by the same applicants and having the same filing day as the present application.

The element produced typically is a refractive or diffractive optical element - such as a lens -, but also may e.g. also have a micromechanical function in at least one region.

The tool comprises a plurality of replication sections, thus allowing for the simultaneous manufacturing of an array of elements on a common substrate. This common substrate may be part of an opto-electronic or micro-opto-electronic assembly comprising optical and electronic elements produced on a wafer scale and later diced into separate parts.

In an preferred embodiment of the invention, the step of applying said force is accomplished by giving the tool a predetermined weight and placing the tool above the substrate, or by giving the substrate a predetermined weight and placing the substrate above the tool, and letting gravity do the pressing. In this manner, the pressing force can be controlled very precisely and in a very simple manner. Even if no second spacers are present or, where peripheral second spacer portions are present, the stiffness of the replication tool is not sufficient to precisely locally define the z-dimension, the resulting distance between the first spacer portions and the substrate can be controlled very precisely and is reliably repeatable.

According to a further aspect of the invention, a replication tool for manufacturing a plurality of optical elements by replication from a replication material is provided, the replication tool comprising a plurality of replication sections having negative structural features defining the shape of the elements, the replication tool further comprising a plurality of first spacer portions with a flat surface portion and further comprises one or more second spacer portions for defining a distance between the tool and a substrate during replication, wherein the height of the second spacer portions, in a direction of movement of the replication tool against a substrate, is greater than the height of the first spacer portions.

In a preferred embodiment of the invention, each replication section has an associated first spacer portion surrounding it or being arranged around the replication section. The first spacer portion thus defines the shape or the boundary of a periphery of the element created by the replication section.

In a preferred embodiment of the invention, the total area covered by the first spacer portions is between 0.1% and 50%, preferably between 0.5% and 20%, especially preferred between 2% and 10% of the total area of the tool covering the substrate. As a general rule, if the area covered by the first spacer portions is sufficiently large, and exceeds a certain limit, then second spacer portions are not necessarily required. The exact value of said limit depends on the flow properties of the replication material and on the force with which the tool is pressed against the substrate.

In a preferred embodiment of the invention, the total area covered by the second spacer portions - if present - is between 1% and 50%, preferably between 5% and 25%, especially preferred between 10% and 20% of the total area of the tool covering the substrate.

In a preferred embodiment of the invention, the total area covered by the (optional) second spacer portions is between 10% and 1000%, preferably between 25% and 400%, especially preferred between 50% and 200% of the total area covered by the first spacer portions.

Further preferred embodiments are evident from the dependent patent claims. Features of the method claims may be combined with features of the device claims and vice versa.

### BRIEF DESCRIPTION OF THE DRAWINGS

The subject matter of the invention will be explained in more detail in the following text with reference to preferred exemplary embodiments, which are illustrated in the attached drawings, which schematically show:
- Figure 1: a cross section through a replication tool;
- Figure 2: an elevated view of a replication tool;
- Figure 3: an elevated view of another replication tool;
- Figures 4 - 6: steps of a replication process;
- Figures 7 - 10: further tools and replication steps; and
- Figure 11: a flow diagram of replication process.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

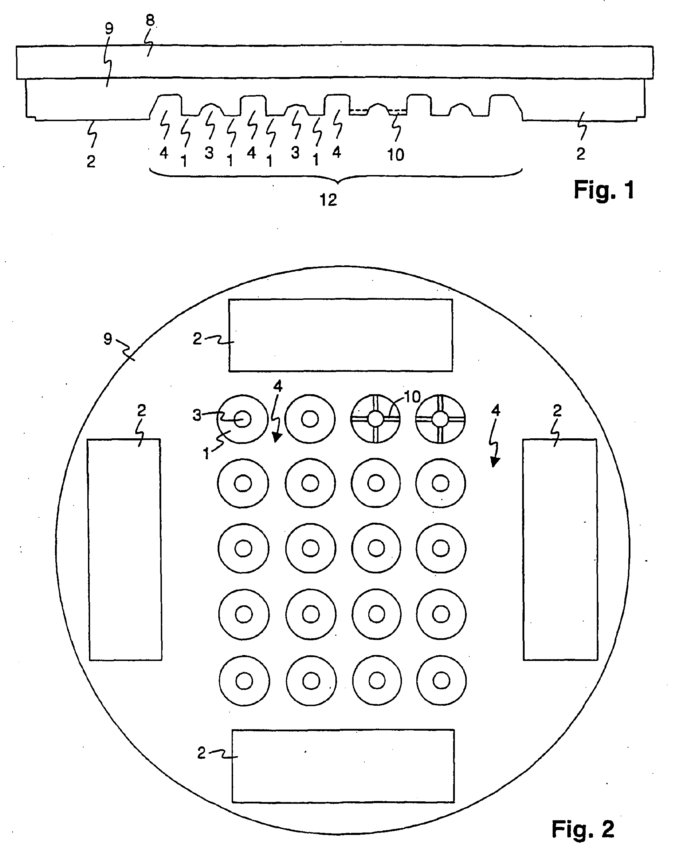

**Figure 1** schematically shows a cross section through a replication tool 9. The tool 9 comprises a plurality of replication sections 3, i.e. negative structural features defining the shape of elements 6 to be created with the tool 9. Each of the replication sections 3 is partially or completely surrounded at its periphery by a first spacer portion or local or element spacer portion 1. The area covered by the replication sections 3 and first spacer portions 1 interspersed in this manner is called the replication area 12. The replication tool may further comprise a rigid back plate 8 to make it dimensionally stiff on a large scale.

The first spacer portion 1 on the one hand serves to define the shape or the boundary of the element 6 in the region close to the substrate 7, and on the other hand to define the height of the element 6 with respect to a base layer. Depending on the dimensional stability of the replication tool 9, it may further serve for defining the height of the element 6 with respect to the substrate 7. That is, the first spacer portion 1 comes to rest against the substrate 7 or at a controllable distance from the substrate 7. The latter distance, the base layer thickness, here also called "element spacer height difference", here is determined by the vertical extension of the second spacer portions 2 relative to that of the first spacer portion 1.

In this text, for the sake of convenience, the dimension perpendicular to the surface of the substrate 7, which comprises an essentially flat surface - is denoted as "height". In actual practice, the entire arrangement may also be used in an upside down configuration or also in a configuration where the substrate surface is vertical or at an angle to the horizontal. The according direction perpendicular to the surface is denoted z-direction. The terms "periphery", "lateral" and "sides" relate to a direction perpendicular to the z-direction. The terms "periphery" and "sides" of the element are thus understood when looking at the substrate from a direction perpendicular to the essentially flat substrate. The element covers a part of the substrate, and the surrounding other parts of the substrate, i.e. the region of space adjacent to both the substrate and the functional part of the element, in particular under the first spacer portions, may be covered with the replication material, without interfering with the function of the element.

The replication tool preferably is made of materials with some elasticity, for example PDMS (polydimethylsiloxane) or another elastic material. This results in a conformal thickness control of the element 6 produced, even if the substrate surface, on which the process is executed is not perfectly planar, or if the replication tool is not perfectly planar.

**Figure 2** shows an elevated view of a replication tool. Individual replication sections 3 are shown surrounded by first spacer portions 1. The first spacer portions 1 may each surround the replication section 3 in an unbroken circle, or may comprise spill or overflow channels 10 that make it easier for the replication material 5 to flow into areas or spill volumes (overflow volumes) 4. A number of separate second spacer portions 2 is arranged around the array of replication sections 3, at the periphery of the tool 9.

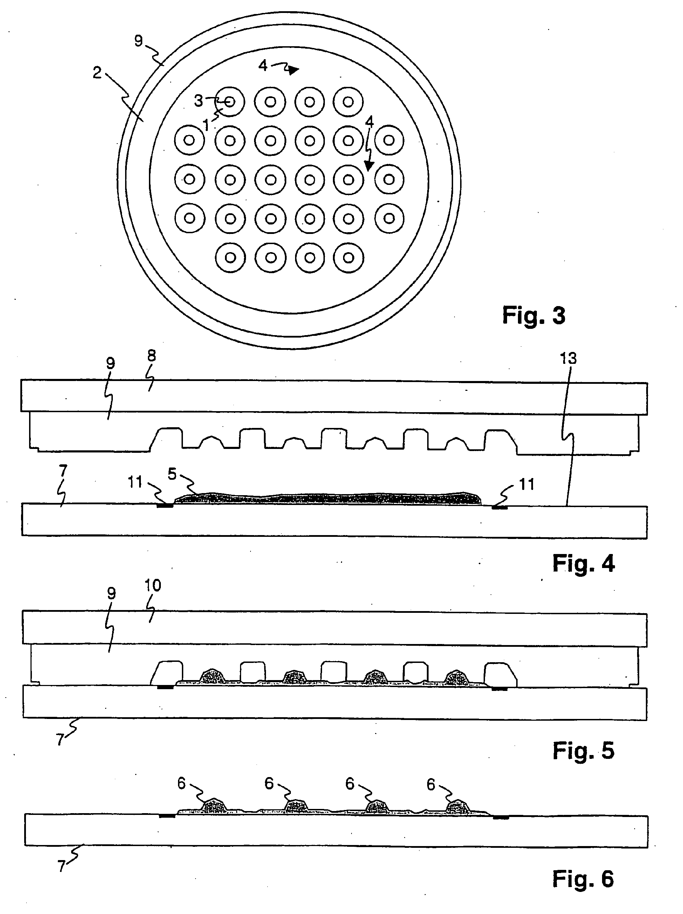

**Figure 3** shows an elevated view of another replication tool, in which a single second spacer portion 2 forms a ring around the grid of replication sections 3.

The tool 9 is preferably adapted to be used in wafer-scale processing, i.e. the substrate containing the array of replication sections may be disc-shaped. Thus, the diameter of the tool 9 preferably lies in a range from 5 cm to 30 cm. Wafer-scale combination of manufacturing with micro-electronics is possible, as is for example disclosed in WO 2005/083 789 by the same applicant, herewith incorporated by reference.

**Figures 4 - 6** schematically show steps of a replication process involving a single dispense operation of replication material: In **Figure 4****,** the replication material 5 is applied to a substrate 7, and the tool 9 is positioned over the substrate 7. The second spacer portions 2 are positioned opposite corresponding second support areas 13 on the substrate 7. The replication material 5 such as an epoxy is in a plastically deformable or viscous or liquid state. Preferably, the replication material 5 is applied only to areas of the substrate 7 which will not come into contact with the second spacer portions 2, i.e. not to the second support areas 13. The same holds when the arrangement is operated in an inverted configuration, with the substrate 7 on top of the tool 9, and the replication material 5 applied to the tool 9. Guiding elements for controlling the relative horizontal displacement and/or the downward movement of the tool 9 may be present, but are not illustrated.

In a preferred embodiment of the invention, for the case in which the replication material 5 is applied to the substrate 7, the substrate 7 or the replication tool comprises a flow stopping section 11 with flow stopping means for preventing the replication material 5 from flowing onto the areas that are to come into contact with the second spacer portions 2. Flow stopping means on the substrate may be mechanical means such as ridges on or troughs in the substrate 7, or a mechanical or etching treatment that reduces the wetting capability of the substrate 7. Alternatively or in addition, such stopping means may effected by using a different material for the flow stopping section 11 of the substrate 7, or applying a chemical to said section, to reduce the wetting property of the substrate 7. Flow stopping means on the replication tool may include discontinuities such as edges preventing the replication material to certain areas by way of capillary forces and/or surface tension. In addition or as an alternative to the flow stopping means of the substrate and/or the replication tool, the flow may also be confined by way of controlling the dynamics, i.e. by making sure the second spacer portions 2 abut the substrate before the replication material arrives at the second support areas.

In another preferred embodiment of the invention, the first spacer portions 1 do not surround every replication section 3, but are e.g. separate pillars dispersed over the replication area 12. In this manner, a certain area of the substrate 7 may remain covered with a thicker section of the replication material 5 that is not functional, as compared to the elements 6.

In **Figure 5****,** the tool 9 has been moved against the substrate 7. The force driving this movement is preferably only the gravity acting on the tool 9. Thus, the weight of the tool 9, including the back plate 8 and optionally an additional mass, defines the force with which the tool 9 is pressed against the substrate 7. This allows a very precise control of the force, and of any elastic deformation of the tool 9 that may take place. The replication sections 3 are filled with replication material 5, and also the spill volumes are at least partially filed by replication material 5.

The second spacer portions 2 touch the substrate 7 without any replication material 5 in between, such that most of the weight of the tool 9 rests on the second spacer portions 2. The first spacer portions 1 are separated from the substrate 7 by the element spacer height difference, the resulting volume being filled with replication material 5.

The ideal element spacer height difference is chosen according to geometrical and thermomechanical constraints. The height difference determines the thickness of a layer of replication material underneath the floating spacers, the so-called base layer.

This thickness can either be given by the design of the element or by the specifications given due to thermomechanical properties. As an example, it may be required that the base layer thickness is below 15 µm to avoid delamination during the dicing process, as explained further below.

The replication material 5 is then hardened by thermal or UV or chemical curing.

In **Figure 6****,** the tool 9 has been removed from the substrate 7, leaving the hardened elements 6 on the substrate 7. Further processing depends on the nature and the function of the elements 6, i.e. the elements 6 may be separated according to an exemplary method from the substrate 7 or remain on the substrate 7 according to the invention for further steps in a wafer-scale production process and later dicing into separate parts.

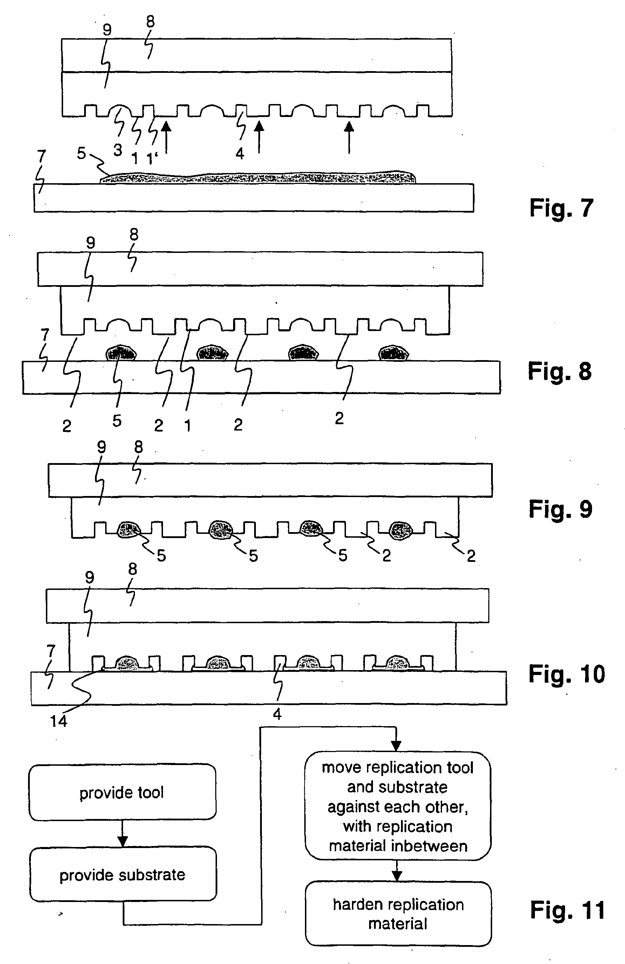

The replication tool 9 of **Figure 7** does not comprise any contact spacers. First spacer portions 1, 1' surround the replication sections 3 but are also arranged between the parts which comprise at least one replication section. The region between the parts of the array is for example where after replication the dicing lines are chosen to lie. In Figure 7, the corresponding locations on the tool are indicated by arrows. By way of the first spacer portions 1' in the region between the parts only the thin base layer of replication material remains. This may be advantageous during the dicing process, where delaminating may occur for too thick layers of replication material. A method of manufacturing an optical element using a method that is particularly advantageous concerning the dicing process is described in U.S patent application 11/384,558 "Manufacturing optical Elements" by Rudmann and Rossi filed on the same day as the present application.

The replication tool shown in **Figure 8** comprises first spacer portions 1 surrounding the replication sections and further comprises second spacer portions 2 distributed over the tool. Such a replication tool is particularly suited for "array replication" where the replication material is dispensed in an array like manner in a plurality of blobs to the points where the optical elements are to be created. In the shown example, the replication material 5 is dispensed on the substrate.

The replication material 5 could also be dispensed to the tool, namely into the cavities which constitute the replication sections. This is shown in the **Figure 9** (only the tool, is shown without the substrate, the substrate does, before meeting the tool, for example not comprise any replication material). This principle of dispensing the replication material on the tool applies to all embodiments of the invention described herein, i.e. tools with and without second spacers, with distributed or with concentrated second spacers, etc.

**Figure 10** shows the situation during replication, after the replication tool 9 and the substrate 7 according to e.g. **Figure 8** or **Figure 9** have been moved against each other. During replication, the second spacer portions 2 abut the surface of the substrate, whereas there can be replication material underneath the first spacer portions 1, as illustrated in Figure 9. Depending on the accuracy by which the replication material volume is determined, replication material may be displaced into the overflow volume 4 and for example form a bulge 14 along an outer edge of the first spacers.

**Figure 11** shows a flow diagram of replication process.

While the invention has been described in present preferred embodiments of the invention, it is distinctly understood that the invention is not limited thereto, but may be otherwise variously embodied and practised within the scope of the claims.

## Claims

1. A method of manufacturing a plurality of optical elements by replication, comprising the steps of
• providing a replication tool (9) that comprises a plurality of replication sections (3) having negative structural features defining the shape of the elements, the tool further comprising a plurality of first spacer portions (1) with a flat surface portion;
• providing a substrate (7);
• moving the replication tool and the substrate against each other, with a replication material (5) in a plastically deformable or viscous or liquid state located between the tool and the substrate;
• applying a force for moving the tool and the substrate against each other, until the first spacer portions are located at a distance from the substrate, the flat surface portion parallel to a surface thereof, and with replication material remaining between the first spacer portions and the substrate;
• hardening the replication material to form the elements;
• removing the replication tool; **characterized by the further step** of
• separating sections of the substrate or of an assembly including the substrate, each section carrying at least one of said optical elements, along dicing lines, wherein said dicing lines are along positions of the substrate where during replication the first spacer portions were located.

2. The method of claim 1, comprising the step of determining said force by giving the tool (9) a predetermined weight and placing the tool above the substrate (7), or by giving the substrate a predetermined weight and placing the substrate above the tool, and letting gravity do the pressing.

3. The method of claim 1 or 2, wherein the tool (9) further comprises one or more second spacer portions (2), the second spacer portions for defining a distance between the tool and the substrate, and wherein the method step of moving the tool against the substrate comprises
• moving the tool against the substrate (7) until the second spacer portions contact a surface of the substrate.

4. The method of claim 3, wherein the second spacer portions (2) comprise a flat surface portion

5. The method of claim 3 or 4, wherein the replication sections (3) are interspersed with the first spacer portions (1), and wherein the second spacer portions (2) are arranged at a periphery of the tool (9) surrounding the replication sections and the second spacer portions do not comprise or define any replication sections.

6. The method of any one of claims 3 to 5, comprising the step of applying the replication material (5) to the tool (9) or the substrate (7) without covering a an area a lateral position of which corresponds to the at least one second spacer portion such that no replication material is present between the second spacer portions and the substrate after the tool is moved against the substrate.

7. The method of any one of claims 3 to 6, wherein the replication sections (3) comprise first and second spacer portions.

8. The method of any one of claims 3 to 7, wherein, in a direction of movement of the tool against the substrate, the height of the first spacer portions and the height of the second spacer portions differs by an element spacer height difference, the element spacer height difference being in the range of 5 micrometers to 30 micrometers.

9. The method of any one the previous claims, wherein the first spacer portions (1) define a height of the elements above the substrate.

10. The method of claim 9, wherein the element is a refractive optical lens.

11. The method of any one of the previous claims, wherein prior to moving the replication tool (9) and the substrate (7) against each other, the replication material (5) is dispensed as a single contiguous amount of material or as a plurality of contiguous amounts of material each covering a plurality of said replication sections.

12. The method of any one of claims 1-10, wherein prior to moving the replication tool and the substrate against each other, the replication material (5) is dispensed in an array of amounts of material, each confined to a part containing one replication section.

## Patentansprüche

1. Ein Verfahren zur Herstellung einer Vielzahl von optischen Elementen durch Replikation, welches die Schritte aufweist
• des Vorsehens eines Replikationswerkzeuges (9), welches eine Vielzahl von Replikationspartien (3) aufweist, die negative Strukturmerkmale aufweisen, welche die Form der Elemente definieren, wobei das Werkzeug des Weiteren eine Vielzahl von ersten Abstandselementen (1) mit einem flachen Oberflächenabschnitt aufweist;
• des Vorsehens eines Trägers (7);
• des Bewegens des Replikationswerkzeuges und des Trägers gegeneinander, wobei das Replikationsmaterial (5) sich in einem plastisch verformbaren oder zähflüssigen oder flüssigen Zustand zwischen dem Werkzeug und dem Träger befindet;
• des Anlegens einer Kraft, um das Werkzeug und den Träger gegeneinander zu bewegen, dies bis die ersten Abstandselemente sich in einem Abstand vom Träger befinden, wobei der flache Oberflächenabschnitt parallel zu einer Oberfläche von diesem ist, und wobei Replikationsmaterial zwischen den ersten Abstandselementen und dem Träger verbleibt;
• des Härtens des Replikationsmaterials, um die Elemente zu formen;
• des Entfernens des Replikationswerkzeuges;
**gekennzeichnet durch den weiteren Schritt**
• des Trennens von Teilstücken des Trägers oder eines Aufbaus einschliesslich des Trägers, wobei jedes Teilstück mindestens eines von diesen optischen Elementen trägt, dies entlang von Teilungslinien, wobei diese Teilungslinien sich entlang von Stellen des Trägers befinden, an welchen sich während der Replikation die ersten Abstandselemente befunden haben.

2. Das Verfahren von Anspruch 1, welches den Schritt des Bestimmens dieser Kraft aufweist, indem dem Werkzeug (9) ein vorbestimmtes Gewicht gegeben wird und das Werkzeug über den Träger (7) gebracht wird, oder indem dem Träger ein vorbestimmtes Gewicht gegeben wird und der Träger über das Werkzeug gebracht wird und das Pressen durch die Schwerkraft erfolgt.

3. Das Verfahren von Anspruch 1 oder 2, wobei das Werkzeug (9) des Weiteren einen oder mehrere zweite Abstandselemente (2) aufweist, die zweiten Abstandselemente für die Definition eines Abstandes zwischen dem Werkzeug und dem Träger sorgen, und wobei der Verfahrensschritt des Bewegens des Werkzeugs gegen den Träger aufweist
• das Bewegen des Werkzeugs gegen den Träger (7) bis die zweiten Abstandselemente eine Oberfläche des Trägers berühren.

4. Das Verfahren von Anspruch 3, wobei die zweiten Abstandselemente (2) einen flachen Oberflächenabschnitt aufweisen.

5. Das Verfahren von Anspruch 3 oder 4, wobei die Replikationspartien (3) mit den ersten Abstandselementen (1) verschachtelt sind, und wobei die zweiten Abstandselemente (2) an einem Rand des Werkzeugs (9) angeordnet sind, welcher die Replikationpartien umgibt und wobei die zweiten Abstandselemente keine Replikationspartien aufweisen oder definieren.

6. Das Verfahren von irgendeinem der Ansprüche 3 bis 5, welches den Schritt aufweist, das Replikationsmaterial (5) auf das Werkzeug (9) oder auf den Träger (7) zu bringen, ohne dabei einen Bereich zu bedecken, von dem eine seitliche Position mindestens einem zweiten Abstandselement so entspricht, dass sich zwischen den zweiten Abstandselementen und dem Träger kein Replikationsmaterial befindet, nachdem das Werkzeug gegen den Träger bewegt wird.

7. Das Verfahren von irgendeinem der Ansprüche 3 bis 6, wobei die Replikationpartien (3) erste und zweite Abstandselemente aufweisen.

8. Das Verfahren von irgendeinem der Ansprüche 3 bis 7, wobei in einer Bewegungsrichtung des Werkzeugs gegen den Träger die Höhe der ersten Abstandselemente und die Höhe der zweiten Abstandselemente sich um einen Element-Abstandselement-Höhenunterschied unterscheiden, wobei der Element-Abstandselement-Höhenunterschied in einem Bereich von 5 Mikrometer bis 30 Mikrometer ist.

9. Das Verfahren von irgendeinem der vorhergehenden Ansprüche, wobei die ersten Abstandselemente (1) eine Höhe der Elemente über dem Träger definieren.

10. Das Verfahren von Anspruch 9, wobei das Element eine optische Refraktionslinse ist.

11. Das Verfahren von irgendeinem der vorhergehenden Ansprüche, wobei vor dem Bewegen des Replikationswerkzeugs (9) und des Trägers (7) gegeneinander das Replikationsmaterial (5) als ein einziges unmittelbar zusammenhängendes Material oder als eine Vielzahl von unmittelbar zusammenhängenden Materialmengen abgegeben wird, wobei jede Materialmenge eine Vielzahl von diesen Replikationspartien überdeckt.

12. Das Verfahren von irgendeinem der Ansprüche 1 bis 10, wobei bevor das Replikationswerkzeug und der Träger gegeneinander bewegt werden, das Replikationsmaterial (5) als eine Anordnung von Materialportionen abgegeben wird, wobei jede Materialportion auf ein Teil begrenzt wird, welches eine Replikationspartie enthält.

## Revendications

1. Procédé de fabrication de plusieurs éléments optiques par reproduction, le procédé comprenant les étapes qui consistent à :
- prévoir un outil de reproduction (9) qui comprend plusieurs sections de reproduction (3) dotées d'éléments structurels négatifs qui définissent la forme des éléments, l'outil comprenant en outre plusieurs premières parties d'écarteur (1) qui présentent une partie à surface plane,
- prévoir un substrat (7),
- déplacer l'outil de reproduction et le substrat l'un vers l'autre après avoir placé un matériau de reproduction (5) à l'état plastiquement déformable, visqueux ou liquide, entre l'outil et le substrat,
- appliquer une force qui déplace l'outil et le substrat l'un vers l'autre jusqu'à ce que les premières parties d'écarteur soient situées à une distance du substrat, que la partie à surface plane soit parallèle à une surface du substrat et que du matériau de reproduction reste entre les premières parties d'écarteur et le substrat,
- durcir le matériau de reproduction pour former les éléments,
- enlever l'outil de reproduction,
**caractérisé par** l'étape supplémentaire qui consiste à
- séparer des parties du substrat ou d'un ensemble qui contient le substrat le long de lignes de quadrillage, chaque partie portant au moins l'un desdits éléments optiques, lesdites lignes de quadrillage passant par des emplacements du substrat où les premières parties d'écarteur étaient situées pendant la reproduction.

2. Procédé selon la revendication 1, comprenant l'étape qui consiste à déterminer ladite force en donnant à l'outil (9) un poids prédéterminé et en plaçant l'outil au-dessus du substrat (7) ou en donnant au substrat un poids prédéterminé et en plaçant le substrat au-dessus de l'outil et en laissant la gravité exercer la poussée.

3. Procédé selon les revendications 1 ou 2, dans lequel l'outil (9) comprend en outre une ou plusieurs deuxièmes parties d'écarteur (2), les deuxièmes parties d'écarteur définissant une distance entre l'outil et le substrat, l'étape du procédé qui consiste à déplacer l'outil contre le substrat comprenant l'étape qui consiste à :
- déplacer l'outil vers le substrat (7) jusqu'à ce que les deuxièmes parties d'écarteur soient en contact avec une surface du substrat.

4. Procédé selon la revendication 3, dans lequel les deuxièmes parties d'écarteur (2) comprennent une partie à surface plane.

5. Procédé selon les revendications 3 ou 4, dans lequel les sections de reproduction (3) sont intercalées entre les premières parties d'écarteur (1) et dans lequel les deuxièmes parties d'écarteur (2) sont agencées à la périphérie de l'outil (9) en entourant les sections de reproduction, les deuxièmes parties d'écarteur ne comprenant ni ne définissant des sections de reproduction.

6. Procédé selon l'une quelconque des revendications 3 à 5, qui comprend l'étape qui consiste à appliquer le matériau de reproduction (5) sur l'outil (9) ou sur le substrat (7) sans recouvrement dans une zone dont la position latérale correspond à la ou aux deuxièmes parties d'écarteur, de telle sorte qu'aucun matériau de reproduction ne soit présent entre les deuxièmes parties d'écarteur et le substrat après que l'outil a été déplacé vers le substrat.

7. Procédé selon l'une quelconque des revendications 3 à 6, dans lequel les sections de reproduction (3) comprennent des premières et des deuxièmes parties d'écarteur.

8. Procédé selon l'une quelconque des revendications 3 à 7, dans lequel, dans la direction du déplacement de l'outil vers le substrat, la hauteur des premières parties d'écarteur et la hauteur des deuxièmes parties d'écarteur diffèrent d'une différence élémentaire de hauteur d'écarteur, la différence élémentaire de hauteur d'écarteur étant de l'ordre de 5 micromètres à 30 micromètres.

9. Procédé selon l'une quelconque des revendications précédentes, dans lequel les premières parties d'écarteur (1) définissent la hauteur des éléments au-dessus du substrat.

10. Procédé selon la revendication 9, dans lequel l'élément est une lentille optique réfractrice.

11. Procédé selon l'une quelconque des revendications précédentes, dans lequel, avant de déplacer l'outil de reproduction (9) et le substrat (7) l'un vers l'autre, le matériau de reproduction (5) est délivré sous la forme d'une unique quantité contiguë de matériau ou sous la forme de plusieurs quantités contiguës de matériau qui couvrent chacune plusieurs desdites sections de reproduction.

12. Procédé selon l'une quelconque des revendications 1 à 10, dans lequel avant de déplacer l'outil de reproduction et le substrat l'un vers l'autre, le matériau de reproduction (5) est distribué en une série de quantités de matériau qui sont toutes limitées à une partie qui contient une section de reproduction.
